# FASCICULE DE BREVET EUROPEEN

(11) **EP 3 966 534 B1**
(45) Date de publication et mention de la délivrance du brevet: **03.07.2024**
(21) Numéro de dépôt: 19733846.0
(22) Date de dépôt: 10.05.2019
(51) Int. Cl.: G01G 19/02

(54) **PROCEDE POUR PESER UN VEHICULE EN TRAIN DE FRANCHIR UN PONT**
VERFAHREN ZUM WIEGEN EINES EINE BRÜCKE ÜBERFAHRENDEN FAHRZEUGS
METHOD FOR WEIGHING A VEHICLE CROSSING A BRIDGE

(43) Date de publication de la demande: 16.03.2022
(73) Titulaire: Osmos Group, 75116 Paris (FR)
(72) Inventeur: CARTIAUX, François-Baptiste, 75007 PARIS (FR); SEMIAO, Jorge Miguel, 33520 Bruges (FR)
(74) Mandataire: IPAZ
(86) Numéro de dépôt international: PCT/FR2019/051057
(87) Numéro de publication internationale: WO 2020/229738

(56) Documents cités:
- WO-A1-2012/139145
- WO-A1-2014/089591
- WO-A1-2018/158995
- CA-A1- 2 491 648
- JP-A- 2017 058 177
- US-A1- 2014 309 966

## Description

La présente invention concerne un procédé pour peser un véhicule franchissant un pont, ce procédé étant du type « Weigh In Motion » ou en abrégé « WIM » (pesée en mouvement).

L'invention concerne en particulier, mais non limitativement, le pesage des poids lourds, notamment ceux de plus de 10 tonnes, franchissant les ponts routiers.

On sait que les véhicules doivent ne pas dépasser un poids total autorisé pour lequel le pont est conçu. Le dépassement du poids total autorisé provoque un vieillissement accéléré de la structure du pont et, dans des cas extrêmes, peut causer la ruine de l'ouvrage. Même si le pesage d'un véhicule en mouvement ne peut prétendre fournir un résultat rigoureux, le repérage de véhicules semblant dépasser le poids total autorisé permet d'envisager une interception du véhicule en vue d'un pesage plus précis.

Par ailleurs la collecte de données sur le nombre de véhicules lourds franchissant le pont, dans chaque classe de tonnages, permet une comparaison avec les prévisions qui avaient été faites lors de la construction du pont et éventuellement une mise à jour des anticipations sur le vieillissement et l'obsolescence de l'ouvrage.

On connaît des dispositifs pour peser des véhicules en mouvement sur un pont. La plupart d'entre eux comportent un détecteur local sensible au poids appliqué par chaque essieu du véhicule lorsque cet essieu passe sur le détecteur. Voir en particulier CA 2 491 648 A1, EP 0 491 655 B1. Le poids total est obtenu en additionnant le poids sur chaque essieu. Ces dispositifs sont sensibles à des facteurs d'incertitude, comme par exemple les mouvements de suspension qui font varier la charge instantanée d'un essieu sur le sol, la vitesse du véhicule, ou encore le couple moteur ou de freinage appliqué aux roues, se traduisant par des transferts de charge entre les essieux, et susceptible de varier au moment précis où le véhicule franchit la ligne de détection, etc.. Une autre source d'incertitude provient de la transmissibilité, difficile à maîtriser, de la charge de l'essieu au détecteur. Pour y remédier, des dispositifs connus comportent des détecteurs placés tout près de la surface de roulement du pont. Ceci oblige à intégrer les détecteurs dans la fabrication du pont, et rend la détection sensible à l'état d'usure de la chaussée. L'addition des mesures obtenues pour chaque essieu fournit pour le poids total du véhicule une valeur entachée de la somme des incertitudes affectant les mesures faites pour chaque essieu. En outre les dispositifs connus sont assez coûteux.

D'autres procédés évitent le recours à des capteurs affectant la chaussée et exposés aux dégradations dues au passage des véhicules. Mais le traitement des signaux est complexe, entaché d'incertitudes et fournit une mesure imprécise du poids par essieu.

Ainsi le US 5,111,897 prévoit de placer un capteur de flexion en sous-face du pont. En outre la vitesse du véhicule est détectée. Une corrélation est établie entre les signaux de flexion et la mesure de vitesse pour indiquer la configuration du véhicule. Le poids total du véhicule est calculé par sommation des poids supportés par chaque essieu, tels que déterminés par traitement du signal de flexion.

Le EP 2 932 490 B1 décrit un tel traitement, consistant à extraire du signal de flexion les composantes dues à chaque essieu.

Le US 2014/00 26 671 enseigne d'utiliser pour la mesure du poids une station de mesure répartie comportant de multiples jauges de contrainte. Les multiples signaux correspondants sont ensuite traités.

Le document JP2017058177 A divulgue un procédé pour peser un véhicule en train de franchir un pont selon l'état de l'art.

Le but de la présente invention est de proposer un procédé simple qui remédie au moins en partie aux inconvénients précités.

Suivant l'invention, le procédé pour peser un véhicule en train de franchir un pont comportant au moins une travée équipée d'un tablier reposant sur deux appuis qui se succèdent avec un écartement entre eux selon la direction de circulation des véhicules sur le pont, comprend :
▪ par au moins un capteur, obtenir des valeurs indicatives d'un paramètre de la déformation globale du tablier en des instants successifs du passage du véhicule ;
▪ acquérir une mesure interprétable en termes de vitesse du véhicule ;
▪ calculer une intégrale desdites valeurs sur un intervalle de temps pendant lequel le tablier est déformé au passage du véhicule ; et
▪ déduire le poids du véhicule par une comparaison faisant intervenir la vitesse du véhicule, ladite intégrale et une échelle de correspondance entre intégrales et poids totaux de véhicules, ladite échelle ayant été préétablie par étalonnage avec des véhicules de poids connu.

Suivant l'invention, c'est le pont lui-même qui sert de bascule. En outre, le poids total du véhicule est déterminé directement et non plus par addition des poids transmis par les différents essieux du véhicule. Lorsque le véhicule passe sur la travée du pont, les valeurs successives d'un paramètre représentatif de la déformation globale de la travée du pont forment un chronogramme dont l'intégrale est représentative du poids du véhicule. En comparant une intégrale calculée sur cette base, avec une échelle de valeurs préétablie par étalonnage avec des véhicules de poids connu, on obtient de façon simple et fiable une mesure du poids du véhicule. Pour un véhicule de poids donné, le chronogramme s'étend sur une durée qui varie en fonction de la vitesse du véhicule, d'où la nécessité de tenir compte de la vitesse du véhicule pour interpréter ladite intégrale des valeurs en termes de poids de véhicule. La vitesse peut être prise en compte soit directement soit sous forme d'un temps mis par le véhicule pour parcourir le trajet entre deux points, par exemple entre deux détecteurs de présence, soit encore en ayant établi plusieurs échelles correspondant chacune à une vitesse de véhicule respective, la comparaison se faisant alors soit avec l'échelle correspondant à la vitesse la plus proche de celle mesurée, ou encore avec une échelle recalculée par interpolation entre les deux échelles correspondant aux deux vitesses encadrant la vitesse mesurée.

Dans une version, l'échelle ou chaque échelle est un tableau à deux colonnes, l'une pour les valeurs de l'intégrale, l'autre pour les poids totaux de véhicule correspondants. Pour établir l'échelle, les capteurs sont déjà en place sur le pont, et raccordés à l'unité de traitement. Pour chaque poids total qui doit figurer sur l'échelle, on charge un véhicule d'essai de façon que son poids total soit égal à cette valeur, au besoin on vérifie son poids total sur une balance précise, on fait passer le véhicule sur le pont à une vitesse déterminée, on calcule l'intégrale des valeurs fournies par l'au moins un capteur et on saisit cette intégrale dans l'échelle en cours d'élaboration, sur la ligne correspondant au poids en question.

En service après étalonnage, à un instant donné où le véhicule à peser est présent, le tablier est déformé par la somme des efforts de gravité appliqués par les essieux du véhicule. Cette déformation ne donne pas directement le poids du véhicule puisque la déformation due à la force appliquée par chaque essieu à un instant donné est pondérée par la position de l'essieu le long du tablier. Par contre, chaque essieu apporte à l'intégrale de la déformation une contribution qui n'a pas besoin d'être pondérée en fonction de la position de l'essieu sur le véhicule ni en fonction de la position du véhicule sur le pont puisque chaque essieu parcourt le tablier d'une extrémité à l'autre, et à la même vitesse que les autres essieux du véhicule. Autrement dit l'intégrale des contributions d'un essieu à la déformation du tablier est une indication du poids de cet essieu et par conséquent l'intégrale des mesures du paramètre, qui correspond à la somme des intégrales des contributions de chaque essieu, indique le poids du véhicule pour une vitesse donnée.

Selon l'invention, on utilise comme mesure principale non pas des mesures de déformation locale comportant des incertitudes pouvant être élevées et difficiles à quantifier, mais une déformation globale, laquelle est beaucoup moins susceptible d'être dégradée par des phénomènes parasites et/ou le vieillissement.

Par déformation globale on entend une déformation qui affecte le tablier sur toute la longueur de la travée. Typiquement il s'agit de la flexion du tablier, plus particulièrement du premier mode de flexion du tablier, donnant lieu sur le tablier à une flèche qui, à partir d'un appui, croît jusque vers le milieu de la longueur du tablier puis décroît jusqu'à l'autre appui. L'expression « déformation globale » doit notamment s'entendre par opposition à une déformation locale qui ne se mesure qu'à proximité directe du point d'application d'un effort tel que l'appui d'une roue sur le tablier.

Dans une version préférée, simple en termes d'algorithme, le procédé comprend :
▪ calculer une intégrale brute des valeurs sur ledit intervalle de temps pendant lequel le tablier est déformé au passage du véhicule ;
▪ obtenir une intégrale normée en procédant à une opération choisie parmi : multiplier l'intégrale brute par la vitesse du véhicule, et : diviser l'intégrale brute par un temps de parcours du véhicule ; et
▪ pour prendre en compte la vitesse du véhicule lors de la comparaison avec l'échelle, utiliser l'intégrale normée.

L'intégrale dite « brute » est typiquement l'intégrale au sens mathématique du terme, l'adjectif « brute » ne servant alors qu'à la caractériser par rapport à l'intégrale « normée » qui intervient également dans cette version de l'invention.

Dans un mode de mise en oeuvre, on détecte, par l'au moins un capteur, la flexion du tablier mesurée en au moins un emplacement intermédiaire, de préférence à mi-distance, entre les deux appuis du tablier. La flexion est de préférence mesurée d'après la variation de la courbure du tablier par rapport à la courbure au repos, au même emplacement. Ladite variation de courbure est elle-même de préférence détectée d'après un allongement à distance de la fibre neutre, comme on l'explicitera encore plus loin.

Dans une version particulièrement avantageuse, l'intégrale prend en compte des valeurs auxquelles participe la déformation induite dans la tabler lorsque le poids du véhicule repose au moins en partie sur une travée adjacente. Dans certains ponts, une charge appliquée sur une travée tend à faire fléchir la travée adjacente vers le haut. Il a été trouvé selon l'invention que même cette action de chaque essieu pouvait avantageusement contribuer à l'intégrale prise en compte pour la comparaison avec l'échelle, à condition bien sûr de faire de même lors de l'étalonnage conduisant à l'établissement de l'échelle. Cela simplifie encore les mesures et le traitement mathématique aboutissant à la détermination du poids total du véhicule.

Pour obtenir des valeurs de la déformation du tablier, on peut par exemple détecter la flexion d'au moins une poutre longitudinale supportant la superstructure du tablier.

Dans une version, pour obtenir lesdites valeurs, on détecte sur une surface inférieure du tablier une variation de longueur le long d'une ligne parallèle à la direction de circulation des véhicules sur le pont, et distante de la fibre neutre du tablier. En général, lorsque le tablier fléchit entre deux appuis, la dimension longitudinale de ladite surface inférieure augmente de manière mesurable. Dans quelques cas, notamment celui de ponts dont les travées sont en voûte, la charge peut avoir pour effet de réduire la dimension longitudinale curviligne en sous-face du pont, ce qui est également mesurable par le ou les capteurs selon l'invention.

Dans une version préférée du procédé selon l'invention, l'au moins un capteur est un capteur en base longue installé parallèlement à la direction de circulation des véhicules sur le pont, et en un site d'installation distant de la fibre neutre du tablier. La mesure en base longue est particulièrement efficace et précise pour renseigner sur la déformation globale subie par le tablier, indépendamment des discontinuités de matière, comme les fissures, microfissures, et zones de déformabilité réduite, discontinuités qui sont fréquentes dans les matériaux de génie civil, souvent hétérogènes. Même avec des matériaux intrinsèquement homogènes, comme l'acier, des hétérogénéités structurelles sont fréquentes, notamment du fait des assemblages entre éléments constitutifs.

Il peut exister différents types de capteurs en base longue, par exemple des cordes vibrantes tendues entre deux points. Mais selon l'invention on privilégie, non limitativement, le capteur en base longue comprenant une corde optique rendue solidaire du tablier de façon à subir des variations de longueur qui sont fonction de la flexion globale du tablier autour d'un axe transversal. Une source lumineuse fournit à la corde optique un signal entrant. Un moyen approprié, tel qu'un convertisseur opto-électronique, génère un signal de mesure indicatif de l'intensité lumineuse d'un signal sortant ayant parcouru au moins une fois la corde optique sur toute sa longueur.

La longueur de la base est choisie pour constituer un bon compromis entre d'une part l'élimination des effets discutés plus haut, liés à l'hétérogénéité de matériaux et/ou de structure, et d'autre part le souhait de privilégier une zone où le tablier se déforme d'une manière bien mesurable par des valeurs d'interprétation simple, par exemple sans englober dans la mesure des zones pouvant avoir des comportements perturbateurs, par exemple les zones d'inversion de courbure ou de contre-courbure, susceptibles d'exister au voisinage d'un appui de la travée. Une zone de mesure située sensiblement à mi-distance entre les deux appuis de la travée s'est avérée particulièrement avantageuse. Typiquement, mais non-limitativement, la base longue présente une longueur d'environ 1 à 2 mètres, ou environ le dixième de la longueur de la travée.

Dans une version, la source lumineuse et le moyen tel que convertisseur opto-électronique sont situés dans l'unité de traitement, laquelle est raccordée par fibre(s) optique(s) avec le capteur. Compte-tenu de la très grande vitesse de la lumière, il y a alors une parfaite synchronisation entre l'injection de lumière dans la corde optique et la mesure correspondante qui peut être immédiatement horodatée par l'unité de traitement. A la fois pour économiser l'énergie et pour bénéficier de cette parfaite synchronisation, on préfère, selon l'invention, n'activer la source qu'à des instants précis pour obtenir des mesures correspondant exactement à ces instants.

Lorsque l'au moins un capteur comprend au moins deux capteurs, donc ici au moins deux cordes optiques, notamment dans les cas exposés ci-après, il est préféré selon l'invention qu'une même source lumineuse alimente les deux cordes optiques, via des raccordements en fibre optique comme exposé plus haut, de façon que les mesures soient parfaitement synchronisées entre elles et avec des instants précis.

Dans une version avantageuse, l'au moins un capteur est installé en sous-face de composants porteurs du tablier, tels que des poutres longitudinales supportant la superstructure du tabler.

Dans de nombreuses applications, l'au moins un capteur comprend au moins deux capteurs espacés suivant la largeur du tablier. En effet, la déformation du tablier n'est en général pas uniforme sur la largeur du tablier, et peut dépendre de la position du véhicule dans le sens de la largeur du tablier. En prenant au moins deux mesures en deux emplacements de la largeur du tablier, on réduit de façon simple l'incertitude liée à ladite position du véhicule.

Dans une version, pour calculer l'intégrale brute on ajoute ensemble les valeurs fournies pendant l'intervalle de temps par au moins deux capteurs mesurant le paramètre indicatif de la déformation globale du tablier, chacun en un emplacement respectif de la largeur du tablier.

De préférence on applique aux valeurs fournies par chaque capteur une pondération respective définie d'près des données collectées lors de l'étalonnage.

Dans une version privilégiée, lorsque le pont comporte au moins deux travées, on obtient des valeurs indicatives du paramètre de la déformation globale du tablier pour deux travées du pont, on compare les épisodes de déformation détectés sur une travée avec ceux détectés sur l'autre travée, et on évalue la vitesse du véhicule d'après le temps écoulé entre deux épisodes de déformation sensiblement concordants, associés chacun à l'une des travées.

Pour deux véhicules de même poids mais de configuration différente, ayant par exemple un entraxe différent entre le premier essieu et le dernier essieu, le chronogramme des valeurs du paramètre de déformation a une forme différente. L'intégrale des valeurs du paramètre peut également être différente. Ainsi, selon une option favorisant la précision de la mesure :
▪ lors de l'étalonnage on établit plusieurs échelles correspondant chacune à une classe de véhicules caractérisée par une configuration typique du véhicule ;
▪ on détermine la configuration du véhicule en cours de pesage ;
▪ on affecte le véhicule à l'une des classes de véhicules ; et
▪ la comparaison de l'intégrale se fait avec l'échelle correspondant à cette classe.

Dans une réalisation, on détecte un niveau de contrainte locale d'un élément du pont sensible à la charge locale des roues du véhicule, on extrait de cette détection des instants de présence d'un essieu et une indication de charge sur cet essieu.

Ladite extraction comporte typiquement mais non limitativement une recherche de maximums dans un train de signaux de contrainte locale généré par le passage du véhicule. Ladite recherche de maximums peut être précédée d'un filtrage éliminant des composantes du signal correspondant à des fréquences incompatibles avec les entraxes d'essieux de véhicules.

On peut en particulier déterminer l'empattement du véhicule, et en cas de plus de deux essieux les entraxes des essieux, en multipliant la vitesse du véhicule par le temps séparant respectivement les instants successifs de présence d'un essieu.

Dans une version particulièrement privilégiée, on obtient par la détection locale une valeur relative de la charge des différents essieux du véhicule les uns par rapport aux autres, et on calcule la charge de chaque essieu en rapportant cette valeur relative au poids total du véhicule. Dans cette version, la charge de chaque essieu est calculée en prenant en compte le poids total, contrairement aux procédés connus qui calculent le poids total en additionnant les charges des différents essieux. On évite ainsi une mesure du poids total qui cumule les incertitudes assez grandes présentées par les charges d'essieux déterminées directement.

La détection locale peut non-limitativement être la détection de la déformation d'un élément de superstructure de tablier, en particulier une dalle de tablier, de préférence en un emplacement où cet élément de superstructure est faiblement soutenu par la structure du pont, c'est-à-dire par exemple pas directement au-dessus d'une poutre supportant la superstructure du tablier.

Dans une version, on détecte la contrainte locale par le biais de la déformation locale au moyen d'au moins un capteur en base longue placé de préférence en sous-face de tablier.

Lorsque le pont ne comporte qu'une seule travée, ou bien encore pour regrouper au maximum les moyens de mise en oeuvre du procédé, et aussi pour que les différentes détections selon l'invention soient faites pour une même vitesse du véhicule, on détecte la contrainte locale sur le tablier de ladite travée du pont.

Le procédé selon l'invention permet en outre de surveiller le pont en ce qui concerne son vieillissement et les risques d'avarie qu'il peut présenter. En ce sens, selon une version du procédé, après passage du véhicule, on vérifie le retour du tablier à une géométrie de repos, par vérification que les valeurs indicatives du paramètre de la déformation globale du tablier après le passage du véhicule reviennent sensiblement à leur niveau d'avant le passage, et on lance une alerte sur la fiabilité du pont dans des cas de différence entre les valeurs d'avant et d'après passage.

Toujours dans un but de surveillance de l'ouvrage, on peut aussi surveiller les maximums atteints par les valeurs instantanées indicatives du paramètre de déformation globale du tablier.

Dans un mode préféré, on associe aux résultats de mesure un indice de confiance, lequel est dégradé dans l'une au moins des circonstances suivantes : la vitesse du véhicule est très basse, la configuration d'un chronogramme des mesures indicatives présente des anomalies, la configuration du véhicule est éloignée des configurations typiques pour lesquelles une échelle a été préétablie, les valeurs instantanées du paramètre indicatif de la déformation globale sont incohérentes avec le poids total déduit de la comparaison avec ladite échelle. On élimine ainsi les mesures suspectes d'être sans rapport avec la réalité du véhicule. Par exemple si la circulation est fortement ralentie la vitesse n'est en général pas uniforme et par conséquent l'intégrale normée ou plus généralement la prise en compte de la vitesse n'est pas fiable. Dans le cas où la vitesse est établie par comparaison de deux épisodes de réponses du ou des capteurs de déformation globale, la mesure sera impossible ou invalidée si deux épisodes suffisamment semblables n'ont pas été trouvés, ou ont été trouvés avec un intervalle de temps manifestement anormal, si la vitesse du véhicule à varié entre-temps, si le véhicule a changé de voie de circulation, etc.

Dans une version avantageuse :
▪ on entre chaque poids de véhicule déterminé par le procédé dans une statistique de la répartition des poids de véhicules ; et
▪ on renouvelle l'étalonnage du pont lorsqu'on constate une dérive significative de la statistique au cours du temps.

Sachant que la répartition statistique réelle des poids de véhicules sur un itinéraire donné est assez constante, ladite dérive est considérée comme un indice d'une possible dérive de la réponse du pont à la charge, et on procède à un nouvel étalonnage.

D'une manière générale il est préférable que les valeurs indicatives soient obtenues par différence avec des valeurs de repos très récentes ou obtenues juste après, de façon à éliminer l'influence de la température.

D'autres particularités et avantages de l'invention ressortiront encore de la description ci-après, relative à des exemples non-limitatifs.

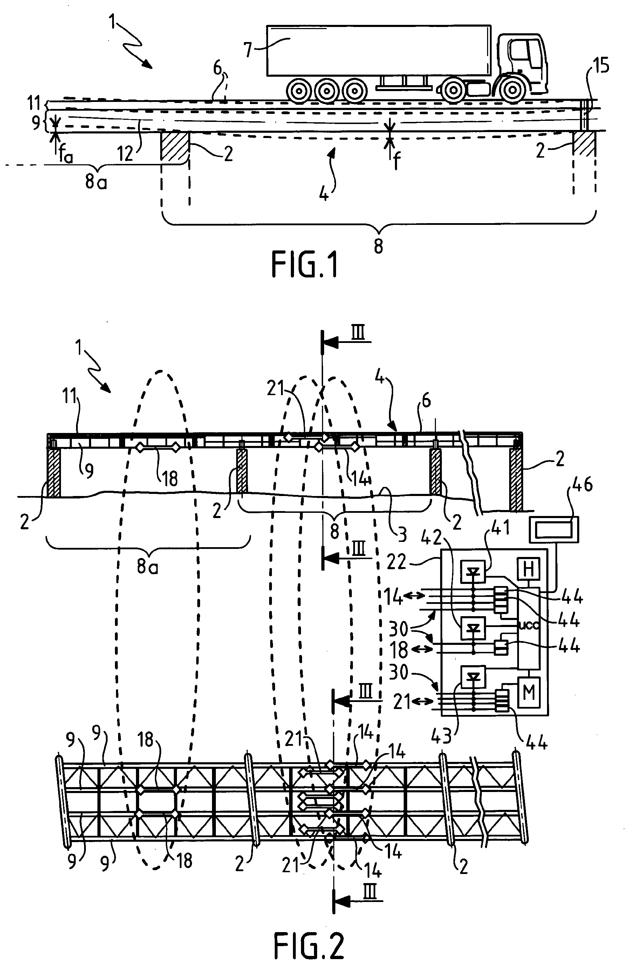

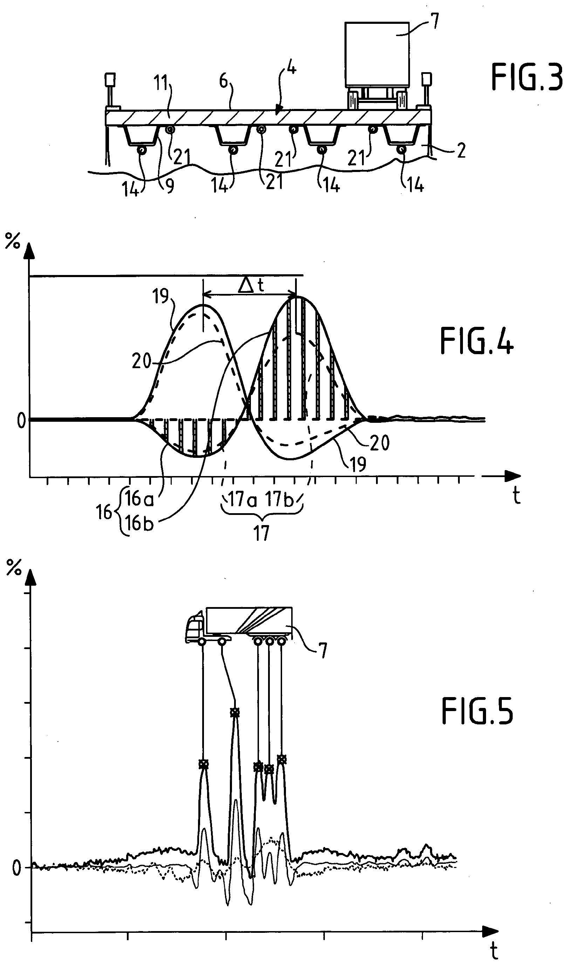

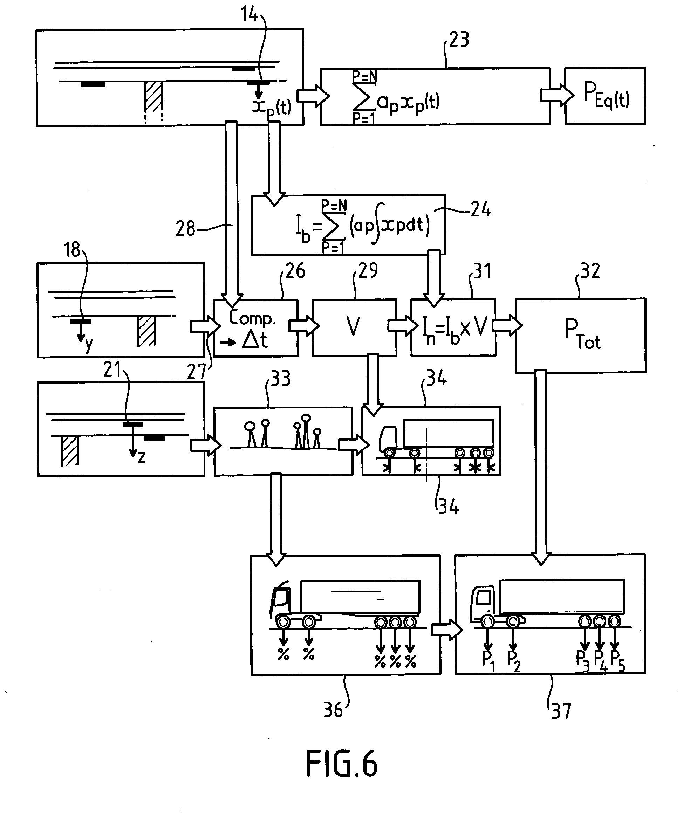

Aux dessins annexés :
▪ La figure 1 est une vue en élévation latérale d'une partie d'un pont en train d'être franchi par un poids lourd ;
▪ La figure 2 est une vue groupée, latérale et de dessus, à échelle réduite, montrant schématiquement le pont de la figure 1 et les différents capteurs qui équipent ce pont dans un exemple de mise en oeuvre de l'invention, un exemple d'unité de traitement étant schématiquement représenté ;
▪ La figure 3 est une vue en coupe selon III-III de la figure 2, avec un véhicule sur le pont ;
▪ La figure 4 est un chronogramme de signaux, en % d'allongement, fournis par certains capteurs de déformation globale des figures 2 et 3 ;
▪ La figure 5 est un chronogramme des signaux fournis par les capteurs de déformation locale des figures 2 et 3 ; et
▪ La figure 6 est un ordinogramme illustrant le procédé selon l'exemple de mise en oeuvre de l'invention.

La description qui précède et celle qui suivent doivent être entendues comme contenant non seulement les particularités précises et les combinaisons précises décrites, mais toute particularité ou combinaison plus ou moins généralisée de particularités, même tirée d'au moins une partie de phrase ou de paragraphe indépendamment du reste de l'exposé, dès lors qu'une telle particularité ou combinaison de particularités peut conférer à l'invention un caractère distinctif et lui permettre de résoudre un problème posé par rapport à l'état de la technique.

Dans la suite comme précédemment on qualifiera de « longitudinale » la direction de circulation des véhicules sur un pont, et de « transversale » la direction horizontale transversale, en général perpendiculaire, à la direction longitudinale. Par ailleurs la description qui suit est relative à un pont routier mais l'invention peut être étendue à d'autres types de ponts, notamment ferroviaires.

Comme le montrent les figures 1 à 3 un pont routier 1 comporte des appuis 2 reposant sur le sol 3 et séparés les uns des autres par une certaine distance longitudinale, en général de l'ordre de 20m. Un tablier 4 s'étend entre les appuis 2 successifs à une certaine distance au-dessus du sol 3, et repose sur les appuis 2. Pour la commodité de l'exposé on considère ici qu'il y a un tablier (individuel) 4 reposant sur chaque paire d'appuis 2 successifs, même si en réalité ce tablier peut faire partie d'un tablier commun posé sur plus de deux ou même sur la totalité des appuis 2 du pont. La surface supérieure 6 du tablier 4 constitue la surface de roulement sur laquelle circulent les véhicules tels que le poids lourd 7 représenté schématiquement aux figures 1, 3 et 5. On appelle « travée » 8 (figure 1) l'ensemble constitué par deux appuis successifs 2 et le tablier 4 qui relie ces deux appuis en s'appuyant sur eux. Un même appui 2 appartient donc en général à deux travées adjacentes sauf dans le cas des appuis d'extrémité du pont.

Le tablier 4 comporte des éléments porteurs qui dans l'exemple sont des poutres longitudinales 9, au nombre de quatre dans l'exemple, sur lesquels repose une superstructure 11, par exemple des dalles sensiblement jointives, dont la surface supérieure, éventuellement définie par une couche de roulement, constitue la surface de roulement 6.

Lorsqu'un véhicule, notamment un poids lourd tel que 7 est en train de franchir une travée 8, le tablier 4 (figure 1) se déforme sous l'effet de la charge. Cette déformation est principalement une flexion par laquelle le tablier 4 passe de sa forme de repos représentée en trait plein à la figure 1, à une forme sous charge représentée en pointillés. Cette déformation est dite globale car elle affecte l'ensemble du tablier 4, de l'un à l'autre des appuis 2 de la travée 8. Cette flexion entraîne une modification de la courbure du tablier vu en élévation latérale. Autrement dit si par exemple la courbure au repos est de rayon infini (tablier plan), le rayon de courbure du tablier déformé n'est plus infini. En outre, lorsqu'on considère le tablier en un point quelconque distant de ses appuis 2, il apparaît un déplacement vertical vers le bas, ou flèche f, qui dépend du point considéré. Ladite déformation concerne à la fois les éléments porteurs 9 et la superstructure 11 qui sont convenablement solidarisés à cet effet. S'agissant de la flexion, on définit la « fibre neutre » 12 (figure 1) de cet ensemble, autrement dit la ligne le long de laquelle la flexion n'entraîne ni compression ni allongement de la matière. Du côté inférieur, opposé à la charge, donc en-dessous de la fibre neutre 12, la matière s'étire longitudinalement, et du côté de la charge la matière se comprime longitudinalement. Ces allongements et contractions, exprimées en %, sont d'autant plus grands que l'on est loin de la fibre neutre.

La déformation du tablier 4 ne donne pas directement une indication du poids du véhicule 7 car cette déformation dépend notamment de la configuration du véhicule, de sa position le long du tablier, et de la répartition du poids sur les différents essieux.

Il a cependant été trouvé selon l'invention que l'intégrale d'une mesure de la déformation pendant un intervalle de temps où le poids du véhicule charge le tablier 4 constituait une indication du poids total du véhicule. Si l'on considère un paramètre choisi de la déformation du tablier, chaque essieu génère un certain chronogramme des valeurs de ce paramètre qui n'est fonction que de la charge sur l'essieu et de la vitesse de circulation du véhicule. Pour un essieu de charge différente, circulant à la même vitesse, le chronogramme est semblable au précédent sauf que toutes les valeurs sont multipliées par le rapport entre les valeurs de charge. L'intégrale des valeurs est donc multipliée par le même rapport. Ainsi l'intégrale est une indication de la charge de l'essieu. Ceci n'est plus vrai si les vitesses de circulation sont différentes, mais tous les essieux d'un véhicule circulent à la même vitesse. Il en résulte que l'intégrale du paramètre indicatif des déformations du tablier du pont est indicative de la somme des charges de tous les essieux du véhicule, autrement dit est indicative du poids total du véhicule.

Comme paramètre indicatif de la déformation du tablier 4, on choisit préférentiellement mais non limitativement l'allongement du tablier selon une ligne longitudinale écartée de la fibre neutre 12.

L'allongement est plus particulièrement mesuré sur les éléments porteurs 9 du tablier 4. Les lois de déformation de la superstructure sous l'effet de la charge sont très complexes et difficiles à appréhender, la déformation de la superstructure étant notamment plus forte entre les éléments porteurs qu'au-dessus des éléments porteurs. Par contre, quels que soient les modes de déformation de la superstructure, toute la charge est en définitive reprise par les éléments porteurs 9, lesquels se déforment essentiellement de manière globale entre les deux appuis comme exposé plus haut.

Dans le mode de mise en oeuvre décrit ici, on place des capteurs d'allongement 14 (figures 2 et 3) sur chacune des quatre poutres longitudinales 9 du tablier 4. Chaque poutre 9 supporte une partie respective du poids du véhicule. En équipant la totalité des poutres 9 on mesure sur chaque poutre la déformation due à la partie correspondante de la charge. Dans certains types de ponts non représentés ici, comportant un nombre relativement élevé d'éléments porteurs, il peut suffire de n'instrumenter qu'une partie d'entre eux, par exemple un sur deux ou sur trois.

Les capteurs 14 sont placés sur la face inférieure des éléments porteurs 9. Ceci facilite leur installation. En même temps, ceci maximise l'écartement entre chaque ligne de mesure et la fibre neutre 12 du tablier, et par conséquent maximise la valeur de l'allongement qui sera mesuré, pour une contrainte donnée.

Les capteurs 14 sont placés sensiblement à mi-distance longitudinale entre les deux appuis 2 de la travée 8, ou plus généralement à distance des appuis 2 de façon à minimiser les risques d'erreurs liées à des phénomènes dus à la proximité des appuis. Dans l'exemple préférentiel représenté, les capteurs 14 sont alignés selon la direction transversale du tablier.

Dans une réalisation, les capteurs sont du type « en base longue ». Ceci signifie que la mesure concerne le paramètre, ici l'allongement longitudinal, non pas en un point isolé de la poutre concernée, mais en cumul sur toute une zone, ici toute une partie de la longueur de l'élément porteur 9. Ainsi on évite l'incertitude de mesure liée à l'hétérogénéité de la plupart des matériaux et/ou structures utilisés en génie civil. Autrement dit la valeur fournie par la mesure correspond à la moyenne du paramètre sur la zone, ou « base », de mesure. Typiquement la longueur de la base est d'environ 2 mètres, ou d'environ 10 % de la longueur de la travée 8. Plus généralement, l'homme de métier apprécie le compromis à retenir entre les diverses considérations, notamment s'affranchir des hétérogénéités, optimiser la sensibilité, éviter d'englober des zones susceptibles de perturber la mesure.

De préférence, mais non limitativement, les capteurs 14 sont des cordes optiques, connues en elles-mêmes, consistant en deux ou trois fibres optiques torsadées, fixées contre la poutre en état de précontrainte de traction mécanique. Une source lumineuse injecte de la lumière à une extrémité de la corde optique. Le signal de mesure est l'intensité lumineuse reçue après que cette lumière a parcouru au moins une fois toute la longueur de la corde optique. La mesure d'intensité peut se faire à l'extrémité de la corde optique opposée à l'extrémité d'injection, ou à la même extrémité que l'injection si l'autre extrémité est équipée d'un réflecteur. Si la matière s'allonge, la corde se tend encore davantage que sa précontrainte initiale, ce qui augmente le pincement des fibres optiques à chaque spire du torsadage, et réduit ainsi la lumière transmise. Si au contraire la matière se comprime (allongement négatif), la corde optique est soulagée d'une partie de sa précontrainte initiale, ce qui est détecté par une augmentation de l'intensité lumineuse reçue. Le signal de mesure est par exemple un signal électrique proportionnel à la différence entre l'intensité lumineuse reçue à l'instant de mesure par rapport à une intensité connue comme correspondant à l'état de repos du tablier. Pour rendre la mesure indépendante des déformations d'origine thermique, dues notamment aux variations de température ambiante, le traitement du signal peut comprendre une réactualisation fréquente de la valeur d'intensité correspondant à l'état de repos, identifiable automatiquement par son uniformité dans un intervalle de temps prédéterminé. Grâce à son temps de réaction quasi-nul, ce mode de mesure de déformation garantit une parfaite synchronisation des réponses des différents capteurs, notamment si les capteurs sont tous alimentés par une même source lumineuse et/ou raccordés par fibre optique à l'unité de traitement comportant source lumineuse et détecteur de luminosité reçue.

Il existe a priori un risque important pour qu'une charge, même répartie sur la largeur du tablier, ne soit pas supportée équitablement par tous les éléments porteurs tels que les poutres 9. Pour éliminer cette source d'erreur, les valeurs x_{P} (c'est à dire les valeurs x₁-x_{N} s'il y a N éléments porteurs équipés de capteurs, dans l'exemple N=4) fournies par les capteurs 14 sont affectées d'un coefficient multiplicateur respectif aₚ (a₁-a_{N}) avant d'être additionnées pour fournir la valeur x(t) constituant la valeur du paramètre de déformation à l'instant t.

Pour simplifier la figure 4, celle-ci ne représente, comme signaux fournis par les capteurs 14, que deux signaux 16 et 17 au lieu de quatre. Le lobe 16b du signal 16 correspond à un allongement positif détecté lorsque le véhicule est présent sur la travée 8 comme représenté à la figure 1. Le lobe 16b est précédé dans le temps par un lobe 16a correspondant à un allongement négatif (compression) détecté lorsque le véhicule se trouve sur la travée précédente 8a (à gauche de la figure 1) et provoque un bombement vers le haut de la travée 8 (de même que dans la situation représentée le véhicule 7 se trouvant sur la travée 8 provoque un bombement vers le haut de la travée 8a adjacente, selon une flèche négative fₐ). Dans l'exemple représenté le signal revient au repos après le lobe 16b car, comme représenté à droite de la figure 1, le tablier de la travée suivante est séparé du tablier 4 par une interruption 15. L'intégrale brute du signal 16 pendant l'intervalle de temps où le tablier 4 est déformé par le véhicule est visualisée par l'aire de la surface hachurée verticalement, sachant que la partie négative délimitée par le lobe 16b est comptée négativement dans l'intégrale.

Le signal 17, comprenant lui aussi deux lobes 17a et 17b, est sensiblement affine du signal 16 par rapport à l'axe des temps. Autrement dit, pour chaque instant t, la valeur en % d'allongement du signal 16 et celle du signal 17 sont dans un certain rapport, à peu près constant. Leur non-égalité provient de ce que les poutres sur lesquelles sont placés les capteurs 14 correspondants ne supportent pas équitablement la charge et/ou ne répondent pas de la même façon à une même charge.

Ensuite on intègre les signaux 16 et 17 dans le temps sur tout l'intervalle de temps où leur valeur diffère de la valeur 0%, on multiplie chaque intégrale par son coefficient aₚ respectif puis on additionne les intégrales ainsi pondérées pour obtenir une intégrale brute Ib.

On comprendra que pour un poids de véhicule donné, la durée de l'intervalle de temps est inversement proportionnelle à la vitesse du véhicule, de même par conséquent que l'intégrale brute Ib. Pour obtenir un résultat indépendant de la vitesse du véhicule on calcule une intégrale normée In en multipliant l'intégrale brute Ib par la vitesse V du véhicule.

Le poids total est obtenu en comparant l'intégrale normée In avec une échelle de correspondance donnant le poids total en fonction de l'intégrale normée In.

Pour déterminer l'échelle de correspondance, le pont est préalablement étalonné au cours de séances consistant à faire passer sur le pont déjà instrumenté des véhicules de poids connu, et à calculer l'intégrale In pour de tels véhicules. Lorsque l'intégrale normée In calculée pour un véhicule dont le poids est à mesurer se trouve entre deux valeurs présentes dans l'échelle, le poids du véhicule est déterminé par interpolation entre les deux valeurs de poids correspondant à ces deux valeurs d'intégrale normée de l'échelle.

Les coefficients aₚ affectés à chaque élément porteur instrumenté peuvent également être déterminés par étalonnage. Pour cela on fait passer sur le pont un véhicule de poids connu selon différentes trajectoires longitudinales, et on relève le signal xₚ fourni par chaque capteur 14. Pour chaque trajectoire il y a une certaine relation de proportionnalité spécifique entre les différents capteurs. Cette relation est caractéristique de la trajectoire. On choisit une trajectoire comme étant la trajectoire standard, par exemple la voie de droite pour chaque sens de circulation. L'étalonnage a fourni la relation de proportionnalité entre les capteurs pour la trajectoire standard et pour d'autres trajectoires, donc non-standard. On détermine alors les coefficients aₚ à appliquer aux résultats fournis par les capteurs pour chaque trajectoire d'étalonnage non-standard pour que ces résultats deviennent ceux qui auraient été obtenus sur la trajectoire standard, et qui peuvent ensuite être comparés avec l'échelle de correspondance.

Ensuite, en présence d'un véhicule à mesurer, on détermine la relation de proportionnalité entre les signaux des différents capteurs, on en déduit la trajectoire d'après les résultats d'étalonnage et on applique les coefficients aₚ correspondants pour corriger ces signaux à des valeurs correspondant à la trajectoire standard. Lorsque la trajectoire du véhicule à mesurer ne correspond pas exactement à une trajectoire ayant fait l'objet de l'étalonnage, on peut appliquer des coefficients aₚ obtenus par interpolation entre ceux des deux trajectoires étalonnées les plus proches.

En variante on pourrait aussi avoir des échelles de correspondance entre intégrales normées et poids totaux affectées chacune à une trajectoire possible. Dans ce cas, après avoir détecté la trajectoire comme exposé plus haut, on additionne les signaux non corrigés, on calcule l'intégrale brute et l'intégrale normée, et on détermine le poids du véhicule

Le procédé selon l'invention comporte la prise en compte de la vitesse du véhicule à mesurer, ou, ce qui revient au même, le temps mis par le véhicule pour effectuer un parcours de longueur connue. Il y a donc lieu de mesurer cette vitesse ou ce temps de parcours. L'intérêt de mesurer la vitesse plutôt que simplement le temps de parcours est de fournir l'indication de vitesse en plus de l'indication de poids total du véhicule.

Pour mesurer la vitesse du véhicule il existe de nombreux procédés connus, comme par mesure doppler, par mesure du temps de franchissement d'une distance entre deux capteurs en surface de chaussée ou sous forme de barrière lumineuse, par analyse d'image d'une caméra etc. Tous ces procédés connus ont l'inconvénient d'encombrer la chaussée ou l'espace au-dessus de la chaussée, et de nécessiter des moyens exposés aux incidents, à l'usure, voire au vandalisme ou au vol. En outre certains de ces procédés fournissent une mesure ponctuelle alors qu'une vitesse moyenne sur un trajet correspondant le plus possible à celui le long duquel le véhicule déforme le tablier 4 équipé du capteur 14 est préférable.

Dans une version de l'invention, on équipe une travée 8a adjacente à la travée 8 avec des capteurs 18 identiques aux capteurs 14, et placés de façon semblable de façon qu'ils génèrent des signaux 19 et 20 (figure 4) de forme très semblable, toutefois en symétrie d'axe vertical, aux signaux 16 et 17 générés par les capteurs 14 pour le même véhicule. Le système de traitement compare les signaux fournis par les capteurs 14 et 18. Lorsqu'il repère des signaux suffisamment semblables ou identiques, il calcule le temps Δt écoulé entre des points remarquables des deux signaux, par exemple comme représenté figure 4 les sommets des deux lobes principaux. Connaissant la distance entre les capteurs 18 et 14, la vitesse du véhicule est obtenue en divisant cette distance par Δt.

Il n'est pas nécessaire de prévoir autant de capteurs 18 que de capteurs 14 puisque les capteurs 18 sont destinés à fournir une forme de signal, mais pas nécessairement des valeurs précises. Dans l'exemple représenté à la figure 2, il n'y a que deux capteurs 18 alors qu'il y a quatre capteurs 14. Notamment, mais non limitativement, lorsqu'on a prévu autant de capteurs 18 que de capteurs 14, disposés de la même manière, on peut traiter le signal des capteurs 18 comme celui des capteurs 14 pour corroborer la mesure du poids total du véhicule ou au contraire détecter une anomalie et signaler un défaut de mesure.

Selon une autre particularité importante mais non limitative de l'invention, des moyens sont prévus pour déterminer la configuration du véhicule et le poids supporté par chaque essieu de ce véhicule.

A cet effet il est prévu des capteurs de charge locale 21 (figures 2 et 3) qui sont fixés à la superstructure 11 en des emplacements où celle-ci est faiblement soutenue par les éléments porteurs 9. Plus particulièrement, dans l'exemple représenté, les capteurs 21 sont fixés à la superstructure 11 en-dehors des zones où la superstructure 11 est directement supportée par les éléments porteurs 9. Avantageusement, les capteurs 21 sont fixés en sous-face de la superstructure 11.

Dans une version, les capteurs 21 sont des cordes optiques précontraintes en traction, disposées longitudinalement et qui réagissent aux allongements positifs ou négatifs de leur site d'installation selon les principes connus déjà rappelés plus haut à propos des capteurs 14.

Comme illustré dans un exemple à la figure 5 de tels capteurs fournissent un signal qui, une fois filtré de ses fréquences manifestement parasites car trop élevées ou trop basses par rapport à une fréquence de succession d'essieux d'un véhicule en mouvement, comporte des maximums clairement repérables (indiqués par une croix dans un cercle à la figure 5) chaque fois qu'un essieu passe sur la ligne transversale selon laquelle les capteurs 21 sont alignés. En outre le niveau d'allongement indiqué par chaque maximum reflète la charge de l'essieu. En comparant chaque maximum à la somme de tous les maximums associés à un même véhicule, on obtient une valeur pour le pourcentage de poids du véhicule supporté par l'essieu correspondant. Connaissant le poids total du véhicule d'après le traitement des signaux fournis par les capteurs 14 comme il a été décrit plus haut, on obtient le poids de chaque essieu en multipliant le poids total par le pourcentage déterminé pour chaque essieu, respectivement.

En outre, connaissant la vitesse du véhicule, par exemple mesurée comme décrit précédemment, on calcule d'après le temps écoulé entre les maximums successifs l'entraxe entre les essieux successifs du véhicule. Il en résulte une information sur la configuration du véhicule.

Dans une version perfectionnée de l'invention, lors de l'étalonnage, on établit différentes échelles de correspondance correspondant à différentes configurations typiques de véhicules. La comparaison avec l'échelle de correspondance se fait après avoir choisi l'échelle correspondant à la configuration de véhicule ressemblant le mieux à celle du véhicule à mesurer, une fois celle-ci déterminée comme il vient d'être dit.

A la figure 2 on a représenté l'unité de traitement 22 reliée par des fibres optiques 30 aux capteurs 14, 18 et 21. Il est prévu dans l'unité de traitement 22 par exemple trois sources lumineuses 41, 42, 43, par exemple des diodes électroluminescentes. Chaque source est commune à toutes les fibres optiques 30 reliées à l'une respective des séries de capteurs 14, 18 et respectivement 21. Les sources 41, 42, 43 sont activées périodiquement par l'unité de commande et de calcul UCC, faisant elle aussi partie de l'unité de traitement 22, et qui coopère avec une horloge H et avec une mémoire M contenant les échelles ayant résulté de l'étalonnage ainsi que d'autres données telles que les coefficients aₚ, la distance entre les capteurs 14 et 18, etc.

Les quatre capteurs 14 sont ainsi alimentés exactement en même temps, de même que les deux capteurs 18 et les quatre capteurs 21, de sorte que les signaux instantanés additionnés selon le procédé correspondent à des positions identiques du véhicule. En outre, de préférence, au moins les sources 41 et 42, alimentant respectivement les capteurs 14 et 18 sont activées de façon synchrone pour améliorer la précision de mesure de l'écart de temps Δt.

Notamment lorsqu'une série de capteurs, par exemple les capteurs 14, comprend un nombre de capteurs trop élevé pour qu'ils soient tous alimentés par une seule source, plusieurs sources commandées de façon synchrone peuvent être prévues.

Dans l'exemple représenté, chaque fibre 30 transmet à la fois le signal injecté par la source 41, 42 ou 43 et le signal reçu du capteur 14, 18 ou 21. Le signal reçu atteint un convertisseur opto-électronique 44 respectif après avoir été séparé de manière connue du signal injecté. Les signaux de sortie des convertisseurs 44 sont envoyés à l'unité de commande et de calcul UCC qui pilote le procédé, effectue les calculs et commande l'affichage des résultats (poids total, configuration du véhicule, poids par essieu, vitesse du véhicule, diverses statistiques, etc.) sur un écran 46 local ou distant.

Une fois l'étalonnage effectué, et ses résultats convenablement enregistrés dans la mémoire M de l'unité de traitement 22, celle-ci réalise automatiquement l'ensemble du procédé

La figure 6 illustre un exemple pour l'ordinogramme du procédé tel qu'il peut notamment être mis en oeuvre dans l'unité de traitement 22.

Les signaux d'allongement xₚ(t) sont fournis à un additionneur 23 qui fait une sommation pondérée par les coefficients aₚ de ces signaux pour donner un poids dit « équivalent » P_{éq}(t). Une alerte est émise lorsque cette valeur dépasse une limite pré-établie. En outre, cette valeur servira à des fins de contrôle comme on le verra plus loin.

Par ailleurs, un étage intégrateur 24 calcule la somme des intégrales, par rapport au temps, des signaux des capteurs 14, chaque intégrale étant affectée de son coefficient de pondération aₚ. Cette somme constitue l'intégrale brute Ib. En variante, l'étage 24 pourrait, avec le même résultat, calculer l'intégrale de la somme des signaux pondérés relatifs à chaque instant, autrement dit par exemple l'intégrale des résultats fournis par l'additionneur 23, ou bien calculer la somme des intégrales des signaux fournis par les capteurs, auxquels on appliquerait, avant intégration, les coefficients de pondération respectifs aₚ.

En troisième lieu, les signaux fournis par les capteurs 14 sont envoyés à une entrée 28 d'un comparateur 26 dont l'autre entrée 27 reçoit les signaux fournis par les capteurs 18 associés à la travée adjacente 8a. Lorsqu'il reçoit un train de signaux de l'un des ensembles de capteurs 14 ou 18, le comparateur se met en attente de recevoir un train de signaux présentant une configuration semblable ou identique de l'autre ensemble de capteurs 18 ou 14. S'il ne reçoit pas un tel train de signaux semblables dans un délai maximum prédéterminé, un défaut est signalé. S'il reçoit un tel train de signaux, il calcule le temps écoulé Δt entre deux points caractéristiques correspondants des deux trains de signaux, par exemple entre les deux sommets des chronogrammes des deux signaux comme illustré figure 4, et il fournit cette valeur Δt à un étage 29 de calcul de la vitesse V du véhicule. L'étage 29 divise la distance longitudinale entre les capteurs 14 et 18 par le temps Δt. Un second étage de calcul 31 calcule l'intégrale normée In en multipliant l'intégrale brute I_{b} par la vitesse V. Dans un étage 32, le poids total du véhicule P_{Tot} est déduit par comparaison de l'intégrale normée In avec une échelle établie par étalonnage préalable comme il a été dit plus haut. De manière non représentée, le poids total P_{Tot} ainsi évalué est comparé avec le poids équivalent P_{eq}. Une anomalie est détectée lorsque la comparaison de P_{Tot} avec le chronogramme de P_{Eq}(t) est en-dehors de certains critères de cohérence, par exemple si le maximum de P_{Eq}(t) semble incohérent avec P_{Tot}.

Par ailleurs, le signal des capteurs de déformation locale 21 est traité par un étage de filtration et de recherche de maximums 33 fournissant en sortie des indications sur les instants de présence de chaque essieu du véhicule et sur l'intensité de la contrainte respectivement exercée par chaque essieu sur les capteurs 21, comme exposé en référence à la figure 5. Un étage 34 détermine la configuration du véhicule, en particulier le nombre d'essieux et l'entraxe entre essieux successifs. Pour cela, à partir du deuxième maximum trouvé à l'étage 33, l'entraxe par rapport au premier essieu est déterminé en multipliant la vitesse V, fournie par l'étage 31, par le temps écoulé depuis le premier maximum.

Un étage 36 calcule le pourcentage du poids du véhicule qui est supporté par chaque essieu, respectivement, comme il a été décrit précédemment. Puis l'étage 37 calcule le poids P₁, P₂, P₃, P₄ ou Ps supporté par chaque essieu en appliquant au poids total P_{Tot} le pourcentage fourni pour cet essieu par l'étage 36.

## Revendications

1. - Procédé pour peser un véhicule (7) en train de franchir un pont (1) comportant au moins une travée (8) équipée d'un tablier (4) reposant sur deux appuis (2) qui se succèdent avec un écartement entre eux selon la direction de circulation sur le pont, le procédé comprenant :
■ par au moins un capteur (14), obtenir des valeurs indicatives d'un paramètre de déformation globale du tablier, c'est à dire un paramètre d'une déformation qui affecte le tablier sur toute la longueur de la travée, telle que la flexion du tablier, en des instants successifs du passage du véhicule ;
■ acquérir une mesure interprétable en termes de vitesse du véhicule ;
■ calculer une intégrale desdites valeurs sur un intervalle de temps pendant lequel le tablier est déformé au passage du véhicule ;et
■ déduire le poids du véhicule par une comparaison faisant intervenir la vitesse du véhicule, ladite intégrale et une échelle de correspondance entre intégrales et poids totaux de véhicules, ladite échelle ayant été préétablie par étalonnage avec des véhicules de poids connu.

2. - Procédé selon la revendication 1, **caractérisé en ce qu'**il comprend :
■ calculer une intégrale brute des valeurs sur ledit intervalle de temps pendant lequel le tablier est déformé au passage du véhicule ;
■ obtenir une intégrale normée en procédant à une opération choisie parmi : multiplier l'intégrale brute par la vitesse du véhicule, et diviser l'intégrale brute par un temps de parcours du véhicule ; et :
■ pour faire intervenir la vitesse du véhicule dans ladite comparaison, utiliser l'intégrale normée.

3. - Procédé selon la revendication 1 ou 2, **caractérisé en ce que** pour obtenir lesdites valeurs on détecte, par l'au moins un capteur (14), la flexion du tablier (4) mesurée en au moins un emplacement intermédiaire, de préférence à mi-distance, entre les deux appuis (2) du tablier (4).

4. - Procédé selon l'une des revendications 1 à 3, **caractérisé en ce que** pour calculer l'intégrale brute on ajoute ensemble les valeurs (16, 17) fournies pendant l'intervalle de temps par au moins deux capteurs (14) mesurant le paramètre indicatif de la déformation globale du tablier chacun en un emplacement respectif de la largeur du tablier.

5. - Procédé selon l'une des revendications 1 à 4, **caractérisé en ce qu'**on obtient des valeurs indicatives du paramètre de la déformation globale du tablier pour deux travées (8, 8a) du pont, on compare les épisodes de déformation détectés sur une travée avec ceux détectés sur l'autre travée, et on évalue la vitesse du véhicule d'après le temps (Δt) écoulé entre deux épisodes de déformation sensiblement concordants, associés chacun à l'une des travées.

6. - Procédé selon l'une des revendications 1 à 5, **caractérisé en ce que** :
■ lors de l'étalonnage on établit plusieurs échelles correspondant chacune à une classe de véhicules **caractérisée par** une configuration typique du véhicule ;
■ on détermine la configuration du véhicule en cours de pesage ;
■ on affecte le véhicule à l'une des classes de véhicules ; et
■ la comparaison de l'intégrale se fait avec l'échelle correspondant à cette classe,
et de préférence :
■ en ce que pour déterminer la configuration du véhicule on détecte un niveau de contrainte locale d'un élément du pont sensible à la charge locale des roues du véhicule, on extrait de cette détection des instants de présence d'un essieu et une indication de charge sur cet essieu, ou
■ en ce qu'on détecte un niveau de contrainte locale d'un élément du pont sensible à la charge locale des roues du véhicule, on extrait de cette détection des instants de présence d'un essieu et une indication de charge sur cet essieu.

7. - Procédé selon la revendication 6, **caractérisé en ce que** ladite extraction comporte une recherche de maximums dans un train de signaux généré par le passage du véhicule, la recherche de maximums étant de préférence effectuée après filtrage éliminant les composantes du signal correspondant à des fréquences incompatibles avec les entraxes d'essieux de véhicules.

8. - Procédé selon la revendication 6 ou 7, **caractérisé en ce qu'**on détermine l'empattement du véhicule, et en cas de plus de deux essieux les entraxes des essieux, en multipliant la vitesse du véhicule par le temps séparant respectivement les instants successifs de présence d'un essieu.

9. - Procédé selon l'une des revendications 6 à 8, **caractérisé en ce qu'**on obtient par la détection locale une valeur relative de la charge des différents essieux du véhicule les uns par rapport aux autres, et on calcule la charge de chaque essieu en rapportant cette valeur relative au poids total du véhicule.

10. - Procédé selon l'une des revendications 6 à 9, **caractérisé en ce que** la détection locale est la détection de la déformation d'un élément de superstructure (11) de tablier, en particulier une dalle de tablier, de préférence en un emplacement ou cet élément de superstructure est faiblement soutenu par la structure du pont.

11. - Procédé selon l'une des revendications 6 à 10, **caractérisé en ce qu'**on détecte la contrainte locale sur le tablier (4) de ladite travée (8) du pont et/ou par l'intermédiaire d'une déformation locale, au moyen d'au moins un capteur en base longue (21) placé de préférence en sous-face de tablier (4).

12. - Procédé selon l'une des revendications 1 à 11, **caractérisé en ce qu'**après passage du véhicule on vérifie le retour du tablier à une géométrie de repos, par vérification que les valeurs indicatives du paramètre de déformation globale du tablier après le passage du véhicule reviennent sensiblement à leur niveau d'avant le passage, et on lance une alerte sur la fiabilité du pont dans des cas de différence entre les valeurs d'avant et d'après passage.

13. - Procédé selon l'une des revendications 1 à 12, **caractérisé en ce qu'**on associe aux résultats de mesure un indice de confiance, lequel est dégradé dans l'une au moins des circonstances suivantes : la vitesse du véhicule est très basse, la configuration d'un chronogramme des mesures indicatives présente des anomalies, la configuration du véhicule est éloignée des configurations typiques pour lesquelles une échelle a été préétablie, les valeurs instantanées indicatives de la déformation globale sont incohérentes avec le poids total déduit par comparaison avec l'échelle.

14. - Procédé selon l'une des revendications 1 à 13, **caractérisé en ce que** :
■ on entre chaque poids de véhicule déterminé par le procédé dans une statistique de la répartition des poids de véhicules ; et
■ on renouvelle l'étalonnage du pont lorsqu'on constate une dérive significative de la statistique au cours du temps.

15. - Procédé selon l'une des revendications 1 à 14, **caractérisé en ce que** les valeurs indicatives sont obtenues par différence avec des valeurs de repos très proches dans le temps, de façon à éliminer l'influence de la température.

## Patentansprüche

1. Verfahren zum Wiegen eines Fahrzeugs (7), das gerade eine Brücke (1) überquert, die mindestens eine Spannweite (8) aufweist, die mit einer Fahrbahnplatte (4) ausgestattet ist, die auf zwei Stützen (2) ruht, die mit einem Abstand dazwischen gemäß der Verkehrsrichtung auf der Brücke aufeinander folgen, das Verfahren umfassend:
- durch mindestens einen Sensor (14), Erhalten von Werten, die einen Parameter einer gesamten Verformung der Fahrbahnplatte angeben, das heißt einen Parameter einer Verformung, die die Fahrbahnplatte über die Gesamtlänge der Spannweite betrifft, wie die Biegung der Fahrbahnplatte zu aufeinanderfolgenden Zeitpunkten der Durchfahrt des Fahrzeugs;
- Erlangen einer interpretierbaren Messung in Bezug auf die Geschwindigkeit des Fahrzeugs;
- Berechnen eines Integrals der Werte über ein Zeitintervall, während dem die Fahrbahnplatte bei der Durchfahrt des Fahrzeugs verformt wird; und
- Ableiten des Gewichts des Fahrzeugs durch einen Vergleich unter Einbeziehung der Fahrzeuggeschwindigkeit, des Integrals und einer Skala für eine Entsprechung von Integralen und Gesamtgewichten von Fahrzeugen, wobei die Skala durch Kalibrierung mit Fahrzeugen mit bekanntem Gewicht vorher festgelegt wurde.

2. Vorrichtung nach Anspruch 1, **dadurch gekennzeichnet, dass** sie umfasst:
- Berechnen eines Bruttointegrals der Werte über das Zeitintervall, während dem die Fahrbahnplatte bei der Durchfahrt des Fahrzeugs verformt wird;
- Erhalten eines normierten Integrals durch eine Operation, die ausgewählt ist aus: Multiplizieren des Bruttointegrals mit der Geschwindigkeit des Fahrzeugs und Dividieren des Bruttointegrals durch eine Fahrzeit des Fahrzeugs; und:
- zum Einbeziehen der Geschwindigkeit des Fahrzeugs in den Vergleich, Verwenden des normierten Integrals.

3. Verfahren nach Anspruch 1 oder 2, **dadurch gekennzeichnet, dass** zum Erhalten der Werte durch den mindestens einen Sensor (14) die Biegung der Fahrbahnplatte (4) erfasst wird, die an mindestens einer Zwischenstelle, vorzugsweise auf halbem Wege, zwischen den zwei Stützen (2) der Fahrbahnplatte (4) gemessen wird.

4. Verfahren nach einem der Ansprüche 1 bis 3, **dadurch gekennzeichnet, dass** zum Berechnen des Bruttointegrals die Werte (16, 17) zusammenaddiert werden, die während des Zeitintervalls durch mindestens zwei Sensoren (14) bereitgestellt werden, die den Parameter, der die gesamte Verformung der Fahrbahnplatte angibt, je an einer jeweiligen Stelle der Breite der Fahrbahnplatte messen.

5. Verfahren nach einem der Ansprüche 1 bis 4, **dadurch gekennzeichnet, dass** Werte, die den Parameter der gesamten Verformung der Fahrbahn angeben, für zwei Spannweiten (8, 8a) der Brücke erhalten werden, die Verformungsepisoden, die an einer Spannweite erfasst werden, mit denen verglichen werden, die an der anderen Spannweite erfasst werden, und die Geschwindigkeit des Fahrzeugs anhand der Zeit (Δt) bewertet wird, die zwischen zwei im Wesentlichen übereinstimmenden Verformungsepisoden verstrichen ist, die jeweils einer der Spannweiten zugeordnet sind.

6. Verfahren nach einem der Ansprüche 1 bis 5, **dadurch gekennzeichnet, dass**:
- bei der Kalibrierung mehrere Skalen festgelegt werden, die jeweils einer Fahrzeugklasse entsprechen, die durch eine typische Konfiguration des Fahrzeugs gekennzeichnet ist;
- die Konfiguration des Fahrzeugs bei dem Wiegen bestimmt wird;
- das Fahrzeug einer der Fahrzeugklassen zugewiesen wird; und
- der Vergleich des Integrals mit der Skala erfolgt, die dieser Klasse entspricht, und vorzugsweise:
- dadurch, dass zum Bestimmen der Konfiguration des Fahrzeugs ein lokales Spannungsniveau eines Elements der Brücke erfasst wird, das auf die lokale Belastung der Räder des Fahrzeugs reagiert, aus dieser Erfassung Zeitpunkte des Vorhandenseins einer Achse und eine Angabe der Belastung dieser Achse extrahiert werden, oder
- dadurch, dass ein lokales Spannungsniveau eines Elements der Brücke erfasst wird, das auf die lokale Belastung der Räder des Fahrzeugs reagiert, aus dieser Erfassung Zeitpunkte des Vorhandenseins einer Achse und eine Angabe der Belastung dieser Achse extrahiert werden.

7. Verfahren nach Anspruch 6, **dadurch gekennzeichnet, dass** die Extraktion eine Suche nach Maxima in einem Signalzug aufweist, der durch die Durchfahrt des Fahrzeugs erzeugt wird, wobei die Suche nach Maxima vorzugsweise nach einer Filterung erfolgt, die die Signalkomponenten eliminiert, die Frequenzen entsprechen, die mit den Achsabständen von Fahrzeugen nicht kompatibel sind.

8. Verfahren nach Anspruch 6 oder 7, **dadurch gekennzeichnet, dass** der Radstand des Fahrzeugs und im Falle von mehr als zwei Achsen die Mittenabstände der Achsen bestimmt werden, indem die Geschwindigkeit des Fahrzeugs mit der Zeit multipliziert wird, die jeweils die aufeinanderfolgenden Zeitpunkte des Vorhandenseins einer Achse trennt.

9. Verfahren nach einem der Ansprüche 6 bis 8, **dadurch gekennzeichnet, dass** durch die lokale Erfassung ein Relativwert der Belastung der unterschiedlichen Achsen des Fahrzeugs zueinander erhalten wird und die Belastung jeder Achse berechnet wird, indem dieser Relativwert auf das Gesamtgewicht des Fahrzeugs bezogen wird.

10. Verfahren nach einem der Ansprüche 6 bis 9, **dadurch gekennzeichnet, dass** die lokale Erfassung die Erfassung der Verformung eines Überbauelements (11) der Fahrbahnplatte ist, insbesondere einer Bodenplatte der Fahrbahnplatte, vorzugsweise an einer Stelle, an der dieses Überbauelement durch die Brückenstruktur schwach getragen wird.

11. Verfahren nach einem der Ansprüche 6 bis 10, **dadurch gekennzeichnet, dass** die lokale Spannung auf der Fahrbahnplatte (4) der Spannweite (8) der Brücke und/oder über eine lokale Verformung mittels mindestens eines Sensors (21) mit langer Basis erfasst wird, der vorzugsweise an der Unterseite der Fahrbahnplatte (4) platziert ist.

12. Verfahren nach einem der Ansprüche 1 bis 11, **dadurch gekennzeichnet, dass** nach der Durchfahrt des Fahrzeugs die Rückkehr der Fahrbahnplatte zu einer Ruhegeometrie überprüft wird, indem überprüft wird, dass die Werte, die den Parameter der gesamten Verformung der Fahrbahn angeben, nach der Durchfahrt des Fahrzeugs im Wesentlichen auf ihr Niveau vor der Durchfahrt zurückkehren, und dass in Fällen, in denen ein Unterschied zwischen den Werten vor und nach der Durchfahrt besteht, eine Warnung über die Zuverlässigkeit der Brücke ausgelöst wird.

13. Verfahren nach einem der Ansprüche 1 bis 12, **dadurch gekennzeichnet, dass** den Messergebnissen ein Vertrauensindex zugeordnet wird, der unter mindestens einem der folgenden Umstände verschlechtert wird: die Fahrzeuggeschwindigkeit ist sehr niedrig, die Konfiguration eines Zeitdiagramms der Angabemessungen weist Anomalien auf, die Fahrzeugkonfiguration ist weit entfernt von typischen Konfigurationen, für die eine Skala vorher festgelegt wurde, die momentanen Werte, die die gesamte Verformung angeben, sind nicht konsistent mit dem Gesamtgewicht, das durch den Vergleich mit der Skala abgeleitet wurde.

14. Verfahren nach einem der Ansprüche 1 bis 13, **dadurch gekennzeichnet, dass**:
- jedes durch das Verfahren bestimmte Fahrzeuggewicht in eine Statistik der Verteilung der Fahrzeuggewichte eingegeben wird; und
- die Kalibrierung der Brücke erneuert wird, wenn eine signifikante Verschiebung der Statistik im Laufe der Zeit festgestellt wird.

15. Verfahren nach einem der Ansprüche 1 bis 14, **dadurch gekennzeichnet, dass** die Angabewerte durch den Unterschied zu zeitlich sehr nahen Ruhewerten erhalten werden, um den Einfluss der Temperatur zu eliminieren.

## Claims

1. Method for weighing a vehicle (7) crossing a bridge (1) which comprises at least one span (8) having a deck (4) resting on two supports (2) which are positioned sequentially, with a gap therebetween, in the direction of travel across the bridge, the method comprising:
- using at least one sensor (14) to obtain values which indicate a parameter of overall deformation of the deck, i.e. a parameter of a deformation that affects the deck over the entire length of the span, such as bending of the deck, at successive moments during the passage of the vehicle;
- acquiring an interpretable measurement relating to the speed of the vehicle;
- calculating an integral of said values over a period of time during which the deck is deformed during the passage of the vehicle; and
- deducing the weight of the vehicle by a comparison involving the speed of the vehicle, said integral and a scale of correspondence between integrals and total vehicle weights, the scale having been pre-established by calibration with vehicles of known weight.

2. Method according to claim 1, **characterized in that** it comprises:
- calculating a gross integral of the values over said period of time during which the deck is deformed during the passage of the vehicle;
- obtaining a standardized integral by carrying out an operation selected from: multiplying the gross integral by the speed of the vehicle, and dividing the gross integral by a travel time of the vehicle; and:
- using the standardized integral in order to use the speed of the vehicle in said comparison.

3. Method according to claim 1 or 2, **characterized in that**, in order to obtain said values, the bending of the deck (4) is detected by the at least one sensor (14), said bending being measured in at least one intermediate location, preferably halfway between the two supports (2) of the deck (4).

4. Method according to one of claims 1 to 3, **characterized in that** the gross integral is calculated by adding together the values (16, 17) provided during the period of time by at least two sensors (14) measuring the parameter which indicates the overall deformation of the deck, each placed respectively along the width of the deck.

5. Method according to one of claims 1 to 4, **characterized in that** values which indicate the parameter of the overall deformation of the deck are obtained for two spans (8, 8a) of the bridge, the incidents of deformation detected on one span are compared with those detected on the other span, and the speed of the vehicle is evaluated on the basis of the time (Δt) which has elapsed between two substantially consistent deformation incidents, each associated with one of the spans.

6. Method according to one of claims 1 to 5, **characterized in that**:
- during the calibration, multiple scales are established, each corresponding to a class of vehicles **characterized by** a typical vehicle configuration;
- the configuration of the vehicle being weighed is determined;
- the vehicle is assigned to one of the vehicle classes; and
- the comparison of the integral is carried out against the scale corresponding to this class,
and preferably:
- in that to determine the configuration of the vehicle, a level of local stress of a component of the bridge which is sensitive to the local load of the wheels of the vehicle is detected, and the moments when an axle is present and an indication of the load on this axle are extracted from this detection, or
- in that a level of local stress of a component of the bridge which is sensitive to the local load of the wheels of the vehicle is detected, and the moments when an axle is present and an indication of the load on this axle are extracted from this detection.

7. Method according to claim 6, **characterized in that** said extraction comprises a search for maxima in a stream of signals generated by the passage of the vehicle, the search for maxima preferably being carried out after filtering to eliminate the components of the signal which correspond to frequencies that are incompatible with the axle spacings of vehicles.

8. Method according to claim 6 or 7, **characterized in that** the wheelbase of the vehicle, and the axle spacings in the case of more than two axles, is determined by multiplying the speed of the vehicle by the time separating the successive moments when an axle is present.

9. Method according to one of claims 6 to 8, **characterized in that** a relative value for the load of the various axles of the vehicle in relation to each other is obtained from the local detection, and the load of each axle is calculated by relating this relative value to the total weight of the vehicle.

10. Method according to one of claims 6 to 9, **characterized in that** the local detection is the detection of the deformation of a component of a superstructure (11) of the deck, in particular a deck slab, preferably at a location where this superstructure component is weakly supported by the structure of the bridge.

11. Method according to one of claims 6 to 10, **characterized in that** the local stress on the deck (4) of said span (8) of the bridge is detected and/or via local deformation, by means of at least one long distance sensor (21) preferably placed on the underside of the deck (4).

12. Method according to one of claims 1 to 11, **characterized in that** following the passage of the vehicle, the return of the deck to a resting geometry is verified, by verifying that the values which indicate the parameter of overall deformation of the deck after the passage of the vehicle return substantially to the level prior to the vehicle passing, and an alert about the reliability of the bridge is issued in the case of a difference between the values from before and after the passing of the vehicle.

13. Method according to one of claims 1 to 12, **characterized in that** the measurement results are associated with a confidence grade, which is degraded in at least one of the following conditions: the speed of the vehicle is very low, the configuration of a timing chart of indicative measurements has anomalies, the configuration of the vehicle is far from the typical configurations for which a scale has been pre-established, the instantaneous values indicative of the overall deformation are inconsistent with the total weight deduced by comparison with the scale.

14. Method according to one of claims 1 to 13, **characterized in that**:
- each vehicle weight determined by the method is entered into a vehicle weight distribution statistic; and
- the calibration of the bridge is repeated when significant statistical drift is observed over time.

15. Method according to one of claims 1 to 14, **characterized in that** the indicative values are obtained by a difference with rest values that are very close in time, thereby eliminating the influence of temperature.
